# EUROPÄISCHE PATENTANMELDUNG

(11) **EP 4 751 540 A1**
(43) Veröffentlichungstag der Anmeldung: **03.06.2026**
(21) Anmeldenummer: 25217547.6
(22) Anmeldetag: 21.11.2025
(51) Int. Cl.: A01B 15/04, A01B 23/02

(54) **BODENBEARBEITUNGSWERKZEUG MIT FORMANGEPASSTER VERTIEFUNG**

(30) Priorität: 25.11.2024 DE 102024134624
(71) Anmelder: Horsch Maschinen SE & Co. KG, 92421 Schwandorf (DE)
(72) Erfinder: Fuhlbrügge, Benjamin, 92421 Schwandorf (DE)
(74) Vertreter: v. Bezold & Partner Patentanwälte - PartG mbB

(57) **Zusammenfassung**

Die Erfindung betrifft ein Bodenbearbeitungswerkzeug (100), vorzugsweise ein Schar zur Bodenbearbeitung, insbesondere mit einer verschleißoptimierten Formgebung. Das Bodenbearbeitungswerkzeug (100) weist einen Grundkörper (10) mit einem Eingriffsbereich (12) zum Eingriff in ein Bodenmaterial, vorzugsweise einer Werkzeugspitze, und einem Gleitbereich (14) für das Bodenmaterial, vorzugsweise einer Gleitfläche, auf. Der Gleitbereich (14) weist zumindest eine Vertiefung (16) auf, die sich in den Grundkörper (10) erstreckt.

## Beschreibung

Die vorliegende Erfindung liegt auf dem Gebiet der Landtechnik und betrifft ein Bodenbearbeitungswerkzeug, vorzugsweise ein Schar (z. B. ein Grubberschar oder eine Grubberspitze) zur Bodenbearbeitung, insbesondere mit einer verschleißoptimierten Formgebung einer Bodenbearbeitungsoberfläche. Die vorliegende Erfindung betrifft ferner eine landwirtschaftliche Bodenbearbeitungsmaschine mit zumindest einem oder einer Vielzahl an derartigen Bodenbearbeitungswerkzeugen.

Zur Lockerung und Bearbeitung von landwirtschaftlichen Ackerflächen werden bspw. Bodenbearbeitungsmaschinen in Form sogenannter Grubber eingesetzt. Ein derartiger Grubber ist bspw. in der EP 4 079 121 A1 beschrieben. Derartige Bodenbearbeitungsmaschinen umfassen Zinken und daran befestigte, in den Boden geführte Bodenbearbeitungswerkzeuge, z. B. Schare. Ein derartiges Schar wird z. B. in der EP 3 079 453 A1 beschrieben.

Die Schare werden im Betrieb der Bodenbearbeitungsmaschine durch das Erdreich geführt, wodurch die Schare Verschleiß ausgesetzt sind.

Nachteilhaft ergibt sich in bekannten Lösungen eine verschleißbedingte Wartungsanfälligkeit und/oder eine verschleißbedingte Fehleranfälligkeit.

Eine Aufgabe der vorliegenden Erfindung ist es daher, ein Bodenbearbeitungswerkzeug und/oder eine Bodenbearbeitungsmaschine bereitzustellen, mit dem die Nachteile bekannter Lösungen verhindert und/oder gemindert werden. Insbesondere ist es eine Aufgabe der vorliegenden Erfindung, ein verschleißoptimiertes Bodenbearbeitungswerkzeug und/oder eine verschleißoptimierte Bodenbearbeitungsmaschine bereitzustellen.

Diese Aufgaben werden wird durch das Bodenbearbeitungswerkzeug und die landwirtschaftliche Bodenbearbeitungsmaschine nach den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten Aspekt wird ein Bodenbearbeitungswerkzeug bereitgestellt. Bevorzugt handelt es sich bei dem Bodenbearbeitungswerkzeug um ein Schar zur Bodenbearbeitung mit einer insbesondere verschleißoptimierten Formgebung (z. B. mit einer verschleißoptimierten Formgebung einer Bodenbearbeitungsoberfläche) und/oder zur Verwendung in einer landwirtschaftlichen Bodenbearbeitungsmaschine. Das Bodenbearbeitungswerkzeug kann beispielsweise ein Grubberschar und/oder eine Grubberspitze sein.

Das Bodenbearbeitungswerkzeug weist ein Grundkörper mit einem Eingriffsbereich und einem Gleitbereich auf.

Der Eingriffsbereich bildet vorzugsweise eine Werkzeugspitze. Der Eingriffsbereich ist ausgebildet, in ein Bodenmaterial einzugreifen und optional das Bodenmaterial aufzuwerfen.

Der Gleitbereich für das (z. B. durch den Eingriffsbereich aufgeworfene) Bodenmaterial weist zumindest eine Vertiefung auf, die sich in den Grundkörper erstreckt.

Ein Vorteil kann darin liegen, dass sich im Betrieb der Bodenbearbeitungsmaschine Bodenmaterial in der Vertiefung sammeln kann, und derart eine verschleißmindernde Schicht bildet, auf der nachfolgendes Bodenmaterial gleiten kann. Durch den Kontakt von in der Vertiefung gesammeltem zu nachfolgendem Bodenmaterial (z. B. Erde-zu-Erde-Kontakt) kann Verschleiß an dem Bodenbearbeitungswerkzeug selbst verhinderbar und/oder minderbar sein. Darüber hinaus kann der Kontakt Bodenmaterial-zu-Bodenmaterial sich z. B. positiv auf die physikalischen Größen im Reibkontakt auswirken. Die verschleißmindernde oder -hemmende Wirkung ohne einen erhöhten oder sogar geminderten Zugkraftbedarf erzielbar sein. Es können sich dadurch Vorteile in Bezug auf die Energieeffizienz (z. B. den Kraftstoffverbrauch) ergeben.

Die zumindest eine Vertiefung kann z. B. eine Sackloch-Vertiefung und/oder Taschen-artig ausgebildet sein.

Die zumindest eine Vertiefung kann mehrere Vertiefungen wie hierin offenbart umfassen, die optional separat zueinander im Gleitbereich vorgesehen sind oder eine durchgängige Gesamt-Vertiefung bilden.

Die mehreren Vertiefungen können in einer Längsrichtung des Grundkörpers hintereinander angeordnet sein.

Bevorzugt ist der Eingriffsbereich ausgebildet, Bodenmaterial derart aufzuwerfen, dass sich das aufgeworfene Bodenmaterial entlang einer Bewegungsrichtung bewegt.

Die Bewegungsrichtung ist bevorzugt entlang der Längsrichtung des Bodenbearbeitungswerkzeugs orientiert und/oder von dem Eingriffsbereich hin zu dem Gleitbereich orientiert.

Der Gleitbereich kann ausgebildet sein, das aufgeworfene Bodenmaterial entlang der Bewegungsrichtung in die Vertiefung zu leiten. Die Vertiefung kann zum Sammeln des aufgeworfenen Bodenmaterials ausgebildet sein.

Bevorzugt ist das Bodenbearbeitungswerkzeug zur Lockerung eines Bodens konfiguriert.

Der Grundkörper ist bevorzugt einteilig ausgebildet und/oder charakterisiert die Grundgestalt des Bodenbearbeitungswerkzeugs.

Gemäß einem Ausführungsbeispiel kann die zumindest eine Vertiefung zumindest abschnittsweise (z. B. form-)angepasst an zumindest eine Form des Grundkörpers ausgebildet sein. Beispielsweise kann die zumindest eine Vertiefung formkorrespondierend zu der Form ausgebildet sein.

Im Kontext der Erfindung kann unter dem Begriff "angepasst" verstanden werden, dass die zumindest eine Vertiefung z. B. einem Verlauf und/oder einer Ausrichtung der Form folgt. Ist die Form beispielsweise konkav gekrümmt, kann ein Abschnitt der zumindest einen Vertiefung an die Form angepasst sein, indem der Abschnitt ebenfalls konkav gekrümmt ist. Dabei kann der Verlauf und/oder die Ausrichtung der Vertiefung zu demjenigen der Form identisch sein, muss aber nicht identisch sein.

Unter dem Begriff "formkorrespondierend" kann im Kontext der Erfindung z. B. verstanden werden, dass die zumindest eine Vertiefung in Verlauf und Ausrichtung mit der Form (z. B. im Wesentlichen) übereinstimmt und/oder (z. B. im Wesentlichen) identisch zu der Form ausgebildet ist.

Durch die angepasste und/oder formkorrespondierende Ausgestaltung der zumindest einen Vertiefung kann erreichbar sein, dass die Bewegung des Bodenmaterials (z. B. Erdströmung) entlang des Bodenbearbeitungswerkzeugs (z. B. entlang des Schares) im Wesentlichen identisch zu der Bewegung (z. B. Erdströmung) eines Schares ohne Vertiefung bleibt. Die benötigte Zugkraft kann dadurch nicht oder nicht wesentlich erhöht, oder sogar gemindert, werden.

Als Form kommt grundsätzlich jede zweckmäßig geeignete, die Gestalt des Grundkörpers charakterisierende Größe in Betracht.

Gemäß einem Ausführungsbeispiel kann die Form des Grundkörpers z. B. eine (z. B. der Gleitfläche entgegengesetzte und/oder gekrümmte) Außenseite des Grundkörpers sein. Die Außenseite ist z. B. eine Rückseite. Im in der landwirtschaftlichen Bodenbearbeitungsmaschine montierten Zustand des Bodenbearbeitungswerkzeugs weist die Außenseite bevorzugt gegen die Vorwärtsfahrtrichtung.

Denkbar ist, dass sich dadurch innerhalb der zumindest einen Vertiefung und an der Außenseite des Grundkörpers ähnliche Strömungsbedingungen einstellen, was sich vorteilhaft auf den Verschleiß und/oder die benötigte Zugkraft auswirken kann.

Alternativ oder ergänzend kann die Form des Grundkörpers durch eine (z. B. gekrümmte) Mittellinie und/oder durch eine (z. B. gekrümmte) Grundkontur und/oder durch eine (z. B. gekrümmte) Außenkontur des Grundkörpers definiert sein.

Die Mittellinie kann z. B. in einer Symmetrieebene des Grundkörpers verlaufen.

Alternativ oder ergänzend kann die Form des Grundkörpers zumindest eine (z. B. zu dem Gleitbereich querstehende) Seitenfläche des Grundkörpers sein.

Bevorzugt umfasst die zumindest eine Seitenfläche zwei entgegengesetzte Seitenflächen. Die Seitenflächen oder die Seitenflächen können z. B. im Wesentlichen planparallel zu einer Symmetrieebene des Grundkörpers orientiert sein.

Gemäß einem Ausführungsbeispiel kann die Form des Grundkörpers entlang einer Längsrichtung (z. B. einer Haupterstreckungsrichtung) des Grundkörpers gekrümmt sein.

Die Längsrichtung kann z. B. die Richtung der größten räumlichen Ausdehnung des Grundkörpers angeben.

Gemäß einem Ausführungsbeispiel kann die zumindest eine Vertiefung eine Grundfläche aufweisen und/oder durch eine Grundfläche (z. B. des Gleitbereichs und/oder des Grundkörpers) begrenzt sein. Bevorzugt ist die Grundfläche an die Form des Grundkörpers angepasst ausgebildet. Beispielsweise kann die Grundfläche formkorrespondierend zu der Form ausgebildet sein.

Optional bildet die Grundfläche eine Gleitfläche für das (z. B. aufgeworfene) Bodenmaterial. Alternativ oder ergänzend bildet die Grundfläche eine Bodenfläche der zumindest einen Vertiefung. Die Grundfläche kann die zumindest eine Vertiefung also bodenseitig begrenzen. Alternativ oder ergänzend ist die Grundfläche in Bewegungsrichtung stromabwärts des Eingriffsbereichs angeordnet. Alternativ oder ergänzend schließt die Grundfläche (z. B. direkt) an den Eingriffsbereich an.

Die Grundfläche erstreckt sich bevorzugt parallel zur Außenseite.

Gemäß einem Ausführungsbeispiel kann die Grundfläche (z. B. zur Anpassung an die Form des Grundkörpers) eine (z. B. variable) Krümmung in Längsrichtung des Grundkörpers und/oder in Bewegungsrichtung des Bodenmaterials aufweisen.

Gemäß einem Ausführungsbeispiel kann die Grundfläche zumindest eine stufenartige Erhebung aufweisen. Bevorzugt weist die Grundfläche mehrere in einer Längsrichtung des Grundkörpers und/oder in einer Bewegungsrichtung des Bodenmaterials hintereinander angeordnete, stufenartige Erhebungen auf. Die mehren stufenartigen Erhebungen können auf der Grundfläche Treppen-artig ausgebildet sein.

Optional kann die Grundfläche durch die zumindest eine stufenartige Erhebung an die Form des Grundkörpers angepasst sein.

Denkbar ist beispielsweise, dass die Form eine gekrümmte Rückseite des Grundkörpers ist und die Grundfläche an die Rückseite angepasst ist, indem die Grundfläche der Form durch mehrere stufenartige Erhebungen folgt.

Gemäß einem Ausführungsbeispiel kann die zumindest eine stufenartige Erhebung entgegen einer Bewegungsrichtung des Bodenmaterials geneigt sein.

Gemäß einem Ausführungsbeispiel kann die zumindest eine stufenartige Erhebung eine Spitze aufweisen, die bündig mit dem Gleitbereich (z. B. einer durch den Gleitbereich aufgespannten, gedachten Ebene) abschließt oder noch innerhalb der zumindest einen Vertiefung (z. B. unterhalb und/oder noch vor der Ebene) endet. Die Spitze kann also beanstandet zu der Ebene angeordnet sein.

Gemäß einem Ausführungsbeispiel kann der Grundkörper zwischen der zumindest einen Vertiefung und einer der zumindest einen Vertiefung entgegengesetzten Außenseite des Grundkörpers, entlang einer Bewegungsrichtung des Bodenmaterials gesehen, eine im Wesentlichen konstante Wandstärke aufweisen.

Beispielsweise kann der Grundkörper zwischen der Grundfläche und einer der Grundfläche entgegengesetzten Außenseite des Grundkörpers, in einer Bewegungsrichtung des Bodenmaterials gesehen, eine im Wesentlichen konstante Wandstärke aufweisen.

Gemäß einem Ausführungsbeispiel kann die zumindest eine Vertiefung durch zumindest eine Innenfläche, nämlich z. B. zwei gegenüberliegende und/oder zu dem Gleitbereich quer stehende Innenflächen, begrenzt sein und/oder aufweisen, die optional an die Form des Grundkörpers angepasst (z. B. formkorrespondierend zu der Form) ausgebildet ist.

Beispielsweise kann die die zumindest eine Innenfläche an die Form angepasst sein, indem sich die zumindest eine Innenfläche planparallel zu einer der Seitenflächen erstreckt.

Dadurch kann der Verschleiß und/oder die Reibung weiter minderbar sein.

Gemäß einem Ausführungsbeispiel kann die zumindest eine Vertiefung (z. B. zur Anpassung an die Form) einen sich in Bewegungsrichtung des Bodenmaterials (z. B. stetig) vergrößernden Querschnitt und/oder eine sich in Bewegungsrichtung des Bodenmaterials (z. B. stetig) zunehmende Breite aufweisen.

Der Grundkörper und die zumindest eine Vertiefung können, z. B. in einer Blickrichtung auf die zumindest eine Vertiefung, V-förmig ausgebildet sein.

Vorteilhaft kann dadurch ein verschleißmindernder Kontakt von Bodenmaterial zu Bodenmaterial über einem besonders großen Teil des Gleitbereichs ermöglicht werden.

Gemäß einem Ausführungsbeispiel kann das Bodenbearbeitungswerkzeug zumindest ein (z. B. plattenförmiges und/oder erstes) Verschleißminderungselement aufweisen, das in dem Gleitbereich angeordnet ist.

Bevorzugt ist das Verschleißminderungselement ein Hartmetallelement.

Im Kontext der Erfindung kann unter dem Begrifft "Hartmetall" insbesondere ein Metallmatrix-Verbundwerkstoff verstanden werden, bei dem Hartstoffe, die als (zweckmäßig kleine) Partikel vorliegen, durch eine Matrix aus Metall zusammengehalten werden. Alternativ oder ergänzend kann unter dem Begriff "Hartmetall" z. B. ein eine Bindemetallphase und eine Hartstoffphase umfassendes Material verstanden werden. Die Hartstoffphase kann z. B. aus Wolframcarbid (WC), Titancarbid (TiC), Tantalcarbid (TaC) und/oder Niobcarbid (NbC) gebildet sein. Als Bindemetall kann z. B. Kobalt eingesetzt werden. Alternativ oder ergänzend kann unter dem Begriff "Hartmetall" z. B. auch ein mittels eines pulvermetallurgischen Verfahrens durch Pressen und (z. B. Flüssigphasen-)Sintern mit anschließender spanender Bearbeitung hergestellter Werkstoff verstanden werden.

Dadurch kann sich vorteilhaft eine weitere Reduktion des Verschleißes und/oder der Reibung ergeben.

Gemäß einem Ausführungsbeispiel kann das zumindest eine Verschleißminderungselement mehrere Verschleißminderungselemente umfassen.

Die mehreren Verschleißminderungselemente können in einer Längsrichtung des Grundkörpers reihenartig hintereinander angeordnet und/oder quer zu einer Längsrichtung des Grundkörpers nebeneinander angeordnet sein.

Denkbar ist z. B. auch, dass die mehreren Verschleißminderungselemente quer zu einer Längsrichtung des Grundkörpers beidseitig neben der zumindest einen Vertiefung angeordnet sind.

Beispielsweise bedecken die mehreren Verschleißminderungselemente den gesamten Gleitbereich.

Dadurch kann der Verschleiß und/oder die Reibung weiter reduzierbar sein.

Gemäß einem Ausführungsbeispiel kann das Bodenbearbeitungswerkzeug zumindest ein (z. B. plattenförmiges und/oder zweites) Verschleißminderungselement aufweisen, das innerhalb der zumindest einen Vertiefung (z. B. auf der Grundfläche) angeordnet ist.

Auch dieses mindestens eine Verschleißminderungselemente ist bevorzugt ein Hartmetallelement wie hierin offenbart.

Gemäß einem Ausführungsbeispiel kann das Bodenbearbeitungswerkzeug zumindest ein (z. B. plattenförmiges und/oder drittes) Verschleißminderungselement aufweisen, das in dem Eingriffsbereich angeordnet ist.

Auch dieses mindestens eine Verschleißminderungselemente ist bevorzugt ein Hartmetallelement wie hierin offenbart.

Gemäß einem Ausführungsbeispiel kann das Verschleißminderungselement mehrere quer zu einer Längsrichtung des Grundkörpers nebeneinander angeordnete und/oder in einer Längsrichtung des Grundkörpers reihenartig hintereinander angeordnete Verschleißminderungselemente umfassen.

Gemäß einem Ausführungsbeispiel kann der Grundkörper zumindest einen Soll-Verschleißbereich aufweisen, der ausgebildet ist, im Betrieb des Bodenbearbeitungswerkzeugs zu verschleißen und derart zumindest eine weitere Vertiefung auszubilden. Bevorzugt ist in dem zumindest einen Verschleißbereich kein Verschleißminderungselement angeordnet.

Mit anderen Worten kann in dem zumindest einen Soll-Verschleißbereich bewusst Verschleiß zugelassen werden, um zumindest eine weitere Vertiefung zu bilden.

Mit wieder anderen Worten kann eine Anordnung von (bspw. Hartmetall-)Verschleißminderungselementen auf Teilbereiche des Grundkörpers reduziert sein.

Dadurch kann sich eine weitere Reduzierung der Reibung und/oder der benötigten Zugkraft ergeben.

Gemäß einem Ausführungsbeispiel kann der Grundkörper vollständig aus einem Hartmetall bestehen.

Gemäß einem Ausführungsbeispiel kann die zumindest eine Vertiefung (z. B. durchgängig) Taschen-artig und/oder (z. B. in einer Draufsicht und/oder Blickrichtung auf die zumindest eine Vertiefung) Langloch-förmig ausgebildet sein.

Gemäß einem Ausführungsbeispiel kann die zumindest eine Vertiefung mittels eines zerspanenden Herstellverfahrens in den Grundkörper eingebracht sein. Dadurch kann sich eine vergleichsweise scharfkantige Gestalt des Grundkörpers ergeben.

Denkbar ist, dass die zumindest eine Vertiefung (z. B. Tasche) in den Grundkörper hineingearbeitet ist, bspw. durch einen Zerspanungsschritt.

Gemäß einem Ausführungsbeispiel kann der Grundkörper aber auch als Schmiedeteil und/oder als Gussteil ausgeführt sein. Der Grundkörper kann dadurch z. B. Gussschrägen und/oder eine vergleichsweise fließende Gestalt aufweisen.

Die zumindest eine Vertiefung kann in diesem Ausführungsbeispiel bereits (z. B. während eines Ur-Formens) in dem Grundkörper vorgesehen sein.

Gemäß einem Ausführungsbeispiel kann die zumindest eine Vertiefung, in einer Bewegungsrichtung des Bodenmaterials gesehen (z. B. direkt) an den Eingriffsbereich anschließen, um das Bodenmaterial in der zumindest einen Vertiefung aufzunehmen.

Alternativ oder ergänzend kann die zumindest eine Vertiefung mehrere in einer Bewegungsrichtung des Bodenmaterials hintereinander angeordnete Vertiefungen umfassen.

Gemäß einem Ausführungsbeispiel kann die zumindest eine Vertiefung eingerichtet sein, um während eines Feldbetriebs (z. B. während eines Betriebs der Bodenbearbeitungsmaschine) Bodenmaterial zur Ausbildung einer Bodenmaterial-Gleitfläche anzusammeln, wodurch im Feldbetrieb (z. B. zur Verschleißreduzierung) Bodenmaterial auf Bodenmaterial gleitet und/oder Bodenmaterialströmungen entlang der zumindest einen Vertiefung, entlang des Gleitbereichs und/oder entlang des Bodenbearbeitungswerkzeugs im Wesentlich gleich sind wie (z. B. Bodenmaterialströmungen) ohne die zumindest eine Vertiefung.

Gemäß einem zweiten Aspekt wird eine landwirtschaftliche Bodenbearbeitungsmaschine bereitgestellt. Optional ist die landwirtschaftliche Bodenbearbeitungsmaschine zur Auflockerung eines Bodens ausgebildet. Die landwirtschaftliche Bodenbearbeitungsmaschine umfasst ein Bodenbearbeitungswerkzeug wie hierin offenbart.

Es ist denkbar, dass die landwirtschaftliche Bodenbearbeitungsmaschine einen Rahmen, eine Bodenauflockerungsvorrichtung, die an dem Rahmen angebracht ist, und mehrere Zinken aufweist, an die jeweils ein Bodenbearbeitungswerkzeug wie hierin offenbart angebracht ist. Bevorzugt bildet das jeweilige Bodenbearbeitungseinrichtung ein bodenseitiges Ende der Zinken.

Die landwirtschaftliche Bodenbearbeitungsmaschine ist z. B. ein sogenannter Grubber. Die landwirtschaftliche Bodenbearbeitungsmaschine kann im Betrieb z. B. von einem Zugfahrzeug, wie z. B. einem Traktor, gezogen werden.

Vorzugsweise bezieht sich der hierin verwendete Begriff " Bodenauflockerungsvorrichtung" auf jene Einrichtung mit Zinken und/oder mit einem Bodenbearbeitungswerkzeug, die lösbar bzw. zerstörungsfrei abnehmbar vom Rahmen ist. Andererseits bezieht sich der Begriff "Rahmen" vorzugweise auf den Rahmen im engeren Sinne (also bspw. Längsträger und Querträger) und zusätzlich auf Elemente, die integral-einstückig mit dem Rahmen im engeren Sinne verbunden bzw. ausgebildet sind.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Fig. 1A-E: schematische Ansichten eines Bodenbearbeitungswerkzeugs gemäß einem Ausführungsbeispiel;
- Fig. 2A-E: schematische Ansichten eines Bodenbearbeitungswerkzeugs gemäß einem Ausführungsbeispiel;
- Fig. 3A-E: schematische Ansichten eines Bodenbearbeitungswerkzeugs gemäß einem Ausführungsbeispiel; und
- Fig. 4A-D: schematische Ansichten eines Bodenbearbeitungswerkzeugs gemäß einem Ausführungsbeispiel.

Gleiche oder funktional äquivalente Einheiten oder Elemente sind in den Figuren mit denselben Bezugszeichen gekennzeichnet. Zu deren Erläuterung wird teilweise auch auf die Beschreibung anderer Ausführungsbeispiele und/oder Figuren verwiesen, um Wiederholungen zu vermeiden.

Die folgende detaillierte Beschreibung der in den Figuren dargestellten Ausführungsbeispiele dient zur näheren Veranschaulichung oder Verdeutlichung und soll den Umfang der vorliegenden Erfindung in keiner Weise beschränken.

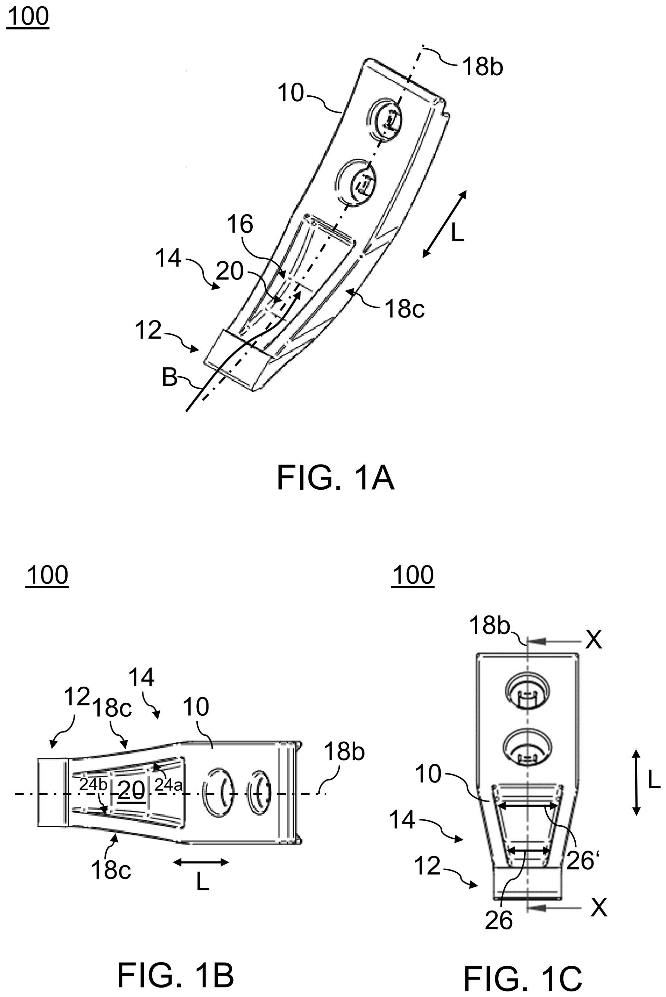

Die Figuren 1A-E zeigen ein Bodenbearbeitungswerkzeug 100 gemäß einem Ausführungsbeispiel in verschiedenen schematischen Ansichten.

Das Bodenbearbeitungswerkzeug 100 ist optional an einem bodenseitigen Ende eines sogenannten Zinkens (nicht dargestellt) einer landwirtschaftlichen Bodenbearbeitungsmaschine (nicht dargestellt) befestigt. Das Bodenbearbeitungswerkzeug 100 ist bevorzugt ein sogenanntes Schar.

Die landwirtschaftliche Bodenbearbeitungsmaschine kann z. B. über eine Ackerfläche gezogen werden während das Bodenbearbeitungswerkzeug 100 in den Ackerboden eingreift, wodurch z. B. eine Lockerung eines Bodenmaterials des Bodens erreichbar ist.

Zum Eingriff in das Bodenmaterial weist ein Grundkörper 10 des Bodenbearbeitungswerkzeug 100 einen Eingriffsbereich 12 auf. Der Eingriffsbereich 12 bildet bevorzugt eine Werkzeugspitze (z. B. Scharspitze). Der Eingriffsbereich 12 ist ausgebildet, in ein Bodenmaterial einzugreifen und optional das Bodenmaterial aufzuwerfen.

Denkbar ist, dass das aufgeworfene Bodenmaterial entlang einer Bewegungsrichtung B zu einem Gleitbereich 14 des Grundkörpers 10 gefördert wird.

Die Bewegungsrichtung B des Bodenmaterials entlang des Grundkörpers 10 charakterisiert die Bewegungsbahn, entlang der das aufgeworfene Bodenmaterial bewegt wird, und ist durch den Pfeil B exemplarisch dargestellt.

Der Gleitbereich 14 weist zumindest eine Vertiefung 16 auf, die sich in den Grundkörper 10 (z. B. Taschen-artig) erstreckt. Im in den Figuren 1A-E, 2A-E und 3A-E weist der Gleitbereich 14 genau eine Vertiefung 16 auf.

Das aufgeworfene Bodenmaterial kann sich in der zumindest einen Vertiefung 16 sammeln, wodurch optional nachfolgendes Bodenmaterial auf dem in der zumindest einen Vertiefung 16 gesammelten Bodenmaterial gleiten kann.

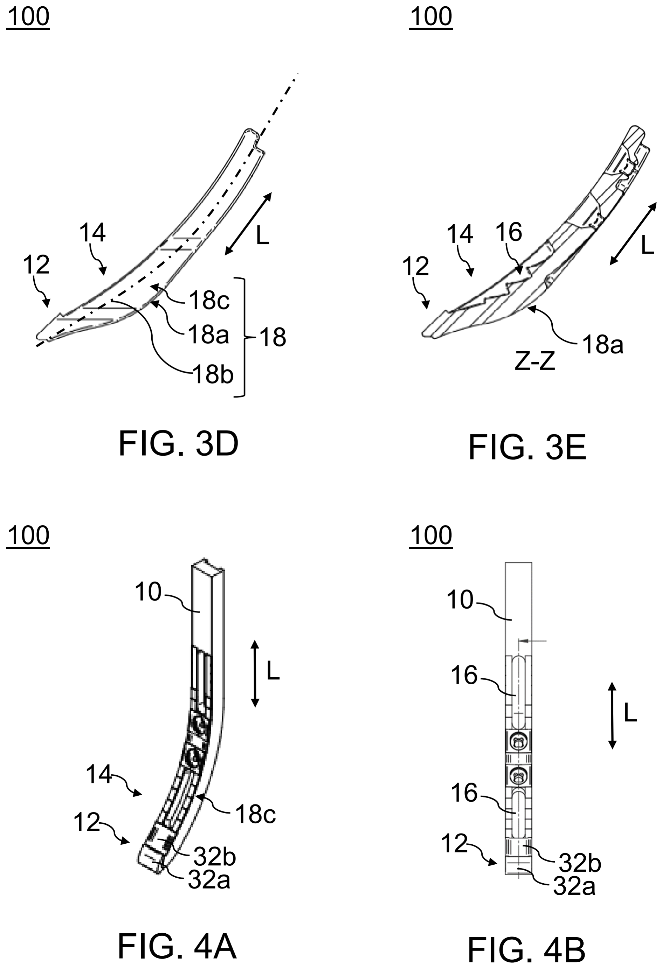

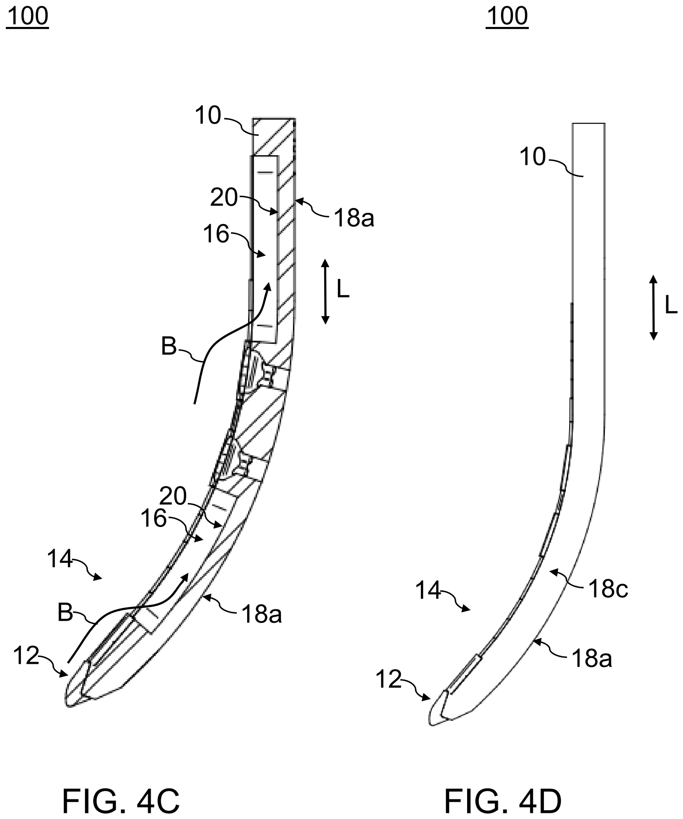

Die mindestens eine Vertiefung 16 kann dabei mehrere Vertiefungen 16 wie hierin offenbart umfassen (siehe z. B. Fig. 4C), die optional separat zueinander im Gleitbereich 14 vorgesehen sind oder eine durchgängige Gesamt-Vertiefung bilden. In den Figuren 4A-D der Gleitbereich 14 zwei Vertiefungen 16 aufweist.

Zur weiteren Minderung des Verschleißes und/oder der Reibung kann die zumindest eine Vertiefung 16 zumindest abschnittsweise angepasst an zumindest eine Form 18 des Grundkörpers 10 ausgebildet sein.

Beispielsweise kann die zumindest eine Vertiefung 16 an die Form 18 angepasst sein, indem die zumindest eine Vertiefung 16 einem Verlauf und/oder einer Ausrichtung der Form 18 folgt. Dabei kann der Verlauf und/oder die Ausrichtung der Vertiefung 16 zu demjenigen/derjenigen der Form 18 identisch sein, muss aber nicht identisch sein.

Es ist aber auch denkbar, dass die zumindest eine Vertiefung 16 zu der Form 18 formkorrespondierend ausgebildet ist, sodass die zumindest eine Vertiefung 16 dadurch vorzugsweise in Verlauf und/oder Ausrichtung mit der Form 18 übereinstimmt und/oder identisch zu der Form 18 ausgebildet ist.

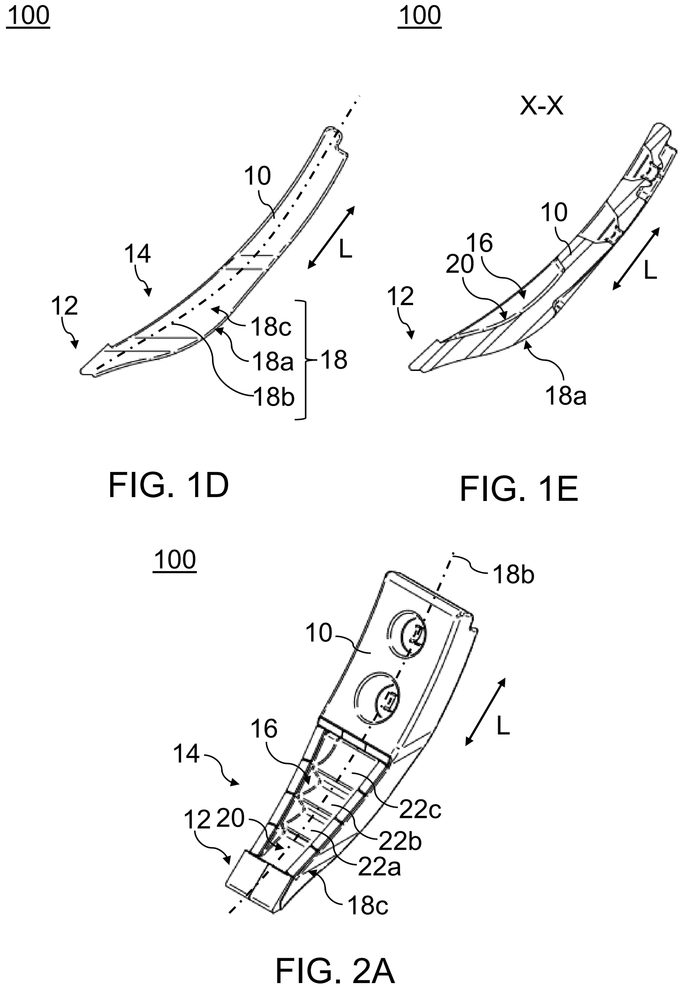

Als Form 18 im Kontext dieser Erfindung kommt grundsätzlich jede zweckmäßig geeignete räumliche Größe des Grundkörpers 10 in Betracht, von denen einige exemplarisch insbesondere anhand der Figuren 1D, 2D und 3D ersichtlich sind.

Beispielsweise kann die Form 18 des Grundkörpers 10 eine dem (z. B. als Gleitfläche ausgebildeten) Gleitbereich 14 entgegengesetzte und/oder gekrümmte Außenseite 18a des Grundkörpers 10 sein. Die Außenseite 18a ist hier exemplarisch eine Rückseite des Grundkörpers 10.

Darüber hinaus kann die Form 18 des Grundkörpers 10 durch eine Mittellinie 18b und/oder Grundkontur und/oder Außenkontur des Grundkörpers 10 definiert sein.

Die Mittellinie 18b kann z. B. in einer Symmetrieebene des Grundkörpers 10 verlaufen.

Darüber hinaus kann die Form 18 des Grundkörpers 10 zumindest eine (z. B. zu dem Gleitbereich 14 querstehende) Seitenfläche 18c des Grundkörpers 10 sein.

Die Seitenflächen 18c können z. B. im Wesentlichen planparallel zu einer Symmetrieebene des Grundkörpers 10 orientiert sein.

Denkbar ist z. B. auch, dass die zumindest eine Vertiefung 16 an mehrere der beschriebenen Formen 18 angepasst ist oder die zumindest eine Vertiefung 16 mehrere Vertiefungen 16 umfasst, die an eine einzige oder mehrere unterschiedliche Formen 18 angepasst sind.

Bevorzugt ist, dass die Form 18 des Grundkörpers 10 entlang einer Längsrichtung L des Grundkörpers 10 gekrümmt ist. Die Längsrichtung L ist in den Figuren exemplarisch die Richtung der größten räumlichen Ausdehnung des Grundkörpers 10.

Wie anhand Figur 1B ersichtlich ist, kann die Vertiefung 16 z. B. zwei gegenüberliegende und zu dem Gleitbereich 14 quer stehende Innenflächen 24a-b aufweisen, die optional an die Form 18 des Grundkörpers 10 angepasst (z. B. formkorrespondierend zu der Form 18) ausgebildet ist.

Beispielsweise kann die die zumindest eine Innenfläche 24a-b an die Form 18 angepasst sein, indem sich die zumindest eine Innenfläche 24a-b parallel zu einer der Seitenflächen 18c erstreckt (siehe insbesondere Figuren 1B, 2B, 3B).

Figur 1C zeigt darüber hinaus, dass die Vertiefung 16 zur Anpassung an die Form 18 eine sich in Bewegungsrichtung B des Bodenmaterials (z. B. stetig) zunehmende Breite 26, 26' aufweisen kann.

Im vorliegenden Beispiel weist die zumindest eine Vertiefung 16 z. B. mit zunehmendem Abstand von dem Eingriffsbereich 12 eine zunehmende Breite 26, 26' auf. Mit anderen Worten ist die weiter vom Eingriffsbereich 12 entfernte Breite 26' der Vertiefung 16 größer als die näher am Eingriffsbereich gelegene Breite 26 der Vertiefung 16.

Der Grundkörper 10 und die Vertiefung 16 können z. B. in einer Blickrichtung auf die Vertiefung 16 V-förmig ausgebildet sein (siehe z. B. Figuren 1B, 1C, 2B, 2C, 3B, 3C).

Wie z. B. aus den Figuren 1A, 1B und insbesondere in der Schnittansicht X-X in Figur 1E, ersichtlich, kann die Vertiefung 16 durch eine Grundfläche 20 begrenzt sein, die - wie hier exemplarisch dargestellt - eine Bodenfläche zu der Vertiefung 16 ausbildet.

Die Grundfläche 20 kann eine Gleitfläche bilden, über die das Bodenmaterials entlang seiner Bewegungsbahn entlang der Bewegungsrichtung B gleitet (siehe z. B. Figuren 1A, 2A, 3A).

Die Grundfläche 20 ist bevorzugt an die Form 18 angepasst, indem sich die Grundfläche 20 planparallel zur Außenseite 18b erstreckt.

Zur Anpassung die Form 18 des Grundkörpers 10 kann die Grundfläche 20 also eine (z. B. variable) Krümmung in Längsrichtung L des Grundkörpers 10 und in Bewegungsrichtung B des Bodenmaterials aufweisen.

Darüber hinaus kann der Grundkörper 10 zwischen der Grundfläche 20 und einer der Grundfläche 20 entgegengesetzten Außenseite 18a des Grundkörpers 10, entlang der Bewegungsrichtung B des Bodenmaterials gesehen, eine im Wesentlichen konstante Wandstärke aufweisen (siehe z. B. Figur 1E).

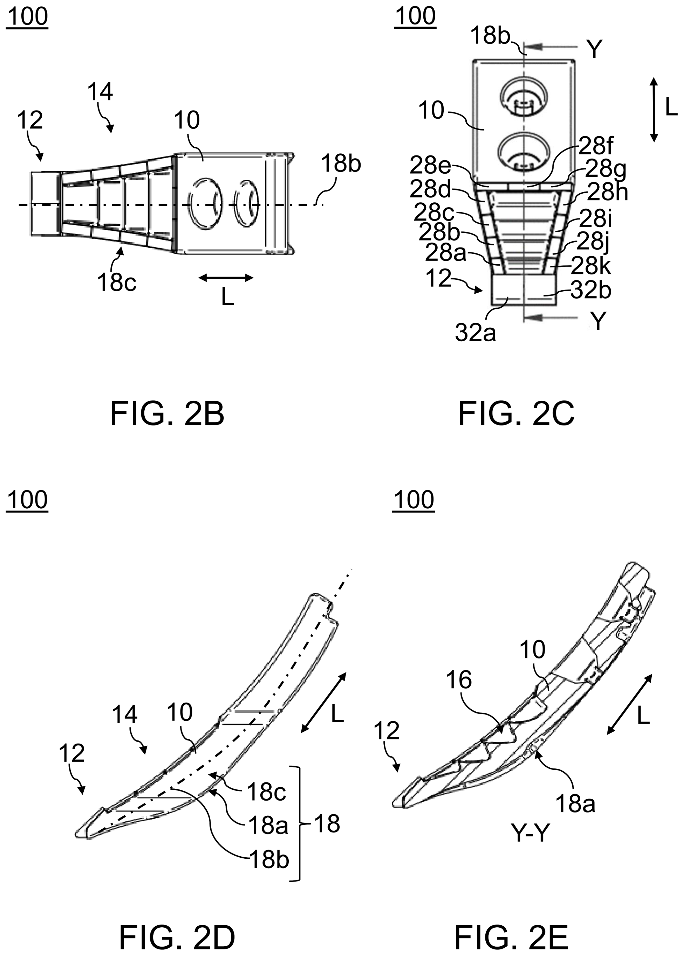

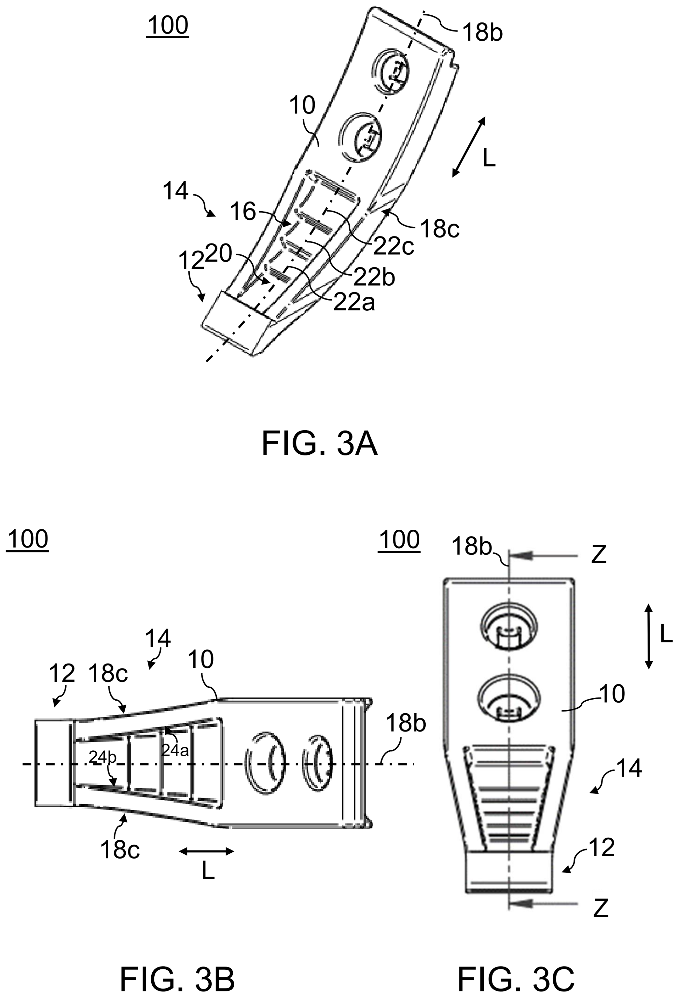

Die Anpassung an die Form 18 kann aber auch gemäß weiterer Aspekte erfolgen, die exemplarisch in den Ausführungsbeispielen der Figuren 2A-E und Figuren 3A-E gezeigt sind.

Zur Anpassung an die Form 18 weist die Grundfläche 20 in diesen Ausführungsbeispielen mehrere stufenartige Erhebungen 22a-c auf.

Die stufenartigen Erhebungen 22a-c sind bevorzugt in einer Längsrichtung L des Grundkörpers 10 und/oder in einer Bewegungsrichtung B des Bodenmaterials Treppen-artig hintereinander angeordnet.

Denkbar ist also beispielsweise, dass die Grundfläche 20 an die gekrümmte Rückseite des Grundkörpers 10 angepasst ist, indem sie der gekrümmten Form der Rückseite durch mehrere stufenartige Erhebungen 22a-c folgt.

Die stufenartigen Erhebungen 22a-c können entgegen einer Bewegungsrichtung B des Bodenmaterials geneigt sein.

Ein Unterschied zwischen den Ausführungsbeispielen der Figuren 2A-E und 3A-E ist insbesondere anhand der Figuren 2E und 3E ersichtlich.

Die Ausführungsbeispiele unterscheiden sich nämlich u. a. in der Höhe der Erhebungen 22a-c. Während die stufenartigen Erhebungen 22a-c in Figur 2E jeweils eine Spitze aufweisen, die bündig mit einer durch den Gleitbereich 14 aufgespannten, gedachten Ebene abschließt, enden die Spitzen der stufenartigen Erhebungen 22a-c der Figur 3E bereits innerhalb der Vertiefung 16 unterhalb der Ebene.

Darüber hinaus sind zur weiteren Verschleißminderung und Reibungsreduktion in dem Ausführungsbeispiel der Figuren 2A-E plattenförmige Verschleißminderungselemente 28a-k, 32a-b vorgesehen.

Eine erste Gruppe von Verschleißminderungselementen 32a-b kann dabei dem Eingriffsbereich 12 zugeordnet sein, während eine zweite Gruppe von Verschleißminderungselementen 28a-k dem Gleitbereich 14 zugeordnet sein kann.

Bevorzugt, aber hier nicht dargestellt, ist auch eine weitere Gruppe an Verschleißminderungselementen, die der Grundfläche 20 zugeordnet ist.

Im hier Ausführungsbeispiel der Figuren 2A-E sind die Verschleißminderungselemente 28a-d, 28h-k in einer Richtung quer zur Bewegungsrichtung B des Bodenmaterials gesehen beidseitig neben der Vertiefung 16 angeordnet.

Darüber hinaus sind hier drei der Verschleißminderungselemente 28e-g quer zu einer Bewegungsrichtung B des Bodenmaterials nebeneinander angeordnet.

Auch im Eingriffsbereich 12 sind zwei Verschleißminderungselemente 32a-b quer zu einer Bewegungsrichtung B des Bodenmaterials nebeneinander angeordnet.

Bevorzugt umfassen die Verschleißminderungselemente 28a-k, 32a-b jeweils ein Hartmetallelement, also sind z. B. aus einem eine Bindemetallphase und eine Hartstoffphase umfassenden Material hergestellt.

Ein weiterer Unterschied der Ausführungsbeispiele der Figuren 1A-E, 2A-E und 3A-E liegt im Herstellverfahren des Grundkörpers 10.

Der im Ausführungsbeispiel der Figuren 1A-E gezeigte Grundkörper 20 ist als Gussteil ausgeführt und kann dadurch z. B. Gussschrägen und/oder eine vergleichsweise fließende Gestalt aufweisen. Die zumindest eine Vertiefung 16 kann in diesem Ausführungsbeispiel bereits (z. B. während des Ur-Formens) in dem Grundkörper 20 vorgesehen sein.

Dagegen ist die zumindest eine Vertiefung 16 in den Ausführungsbeispielen der Figuren 2A-E und 3A-e mittels eines zerspanenden Herstellverfahrens in den Grundkörper 10 eingebracht.

Dadurch kann sich die dargestellte, vergleichsweise scharfkantige Gestalt des Grundkörpers 10 ergeben. Denkbar ist, dass die zumindest eine Vertiefung 16 (z. B. Tasche) in den Grundkörper 20 hineingearbeitet ist, bspw. durch einen Zerspanungsschritt. Denkbar ist auch, dass mehrere Vertiefungen 16 in den Grundkörper 10 hineingearbeitet sind.

Die Figuren 4A-D zeigen ein Bodenbearbeitungswerkzeug 100 gemäß einem Ausführungsbeispiel in verschiedenen schematischen Ansichten.

In diesem Ausführungsbeispiel weist der Grundkörper 10 mehrere, in der Längsrichtung L des Grundkörpers hintereinander angeordnete Vertiefungen 16 auf.

Die Grundfläche 20 der unteren der beiden Vertiefungen 16 verläuft formkorrespondierend zu der gekrümmten Form der des unteren Abschnitts der Außenseite 18a. Die Grundfläche 20 der oberen der beiden Vertiefungen 16 verläuft formkorrespondierend, nämlich planparallel, zu dem oberen Abschnitt der Außenseite 18a.

Darüber hinaus wird insbesondere anhand der Figuren 4A und 4B ersichtlich, dass die beiden Vertiefungen 16, in einer Draufsicht, jeweils im Wesentlichen Langloch-förmig ausgebildet sind.

Die Gesamtlänge jeder der Vertiefungen 16 kann exemplarisch mindestens 15%, mindestens 20%, mindestens 25% oder mindestens 30% der Gesamtlänge des Grundkörpers 10 betragen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Grundkörper
- 12: Eingriffsbereich
- 14: Gleitbereich
- 16: Vertiefung
- 18: Form
- 18a: dem Gleitbereich entgegengesetzte Außenseite des Grundkörpers
- 18b: Mittellinie des Grundkörpers
- 18c: Seitenfläche des Grundkörpers
- 20: Grundfläche
- 22a-c: stufenartige Erhebungen
- 24a-b: Innenflächen
- 26: Breite der Vertiefung
- 26': Breite der Vertiefung
- 28a-k: Verschleißminderungselement des Gleitbereichs
- 32a-b: Verschleißminderungselement des Eingriffsbereichs
- 100: Bodenbearbeitungswerkzeug

- B: Bewegungsrichtung des Bodenmaterials
- L: Längsrichtung

## Patentansprüche

1. Bodenbearbeitungswerkzeug (100), vorzugsweise ein Schar zur Bodenbearbeitung, insbesondere mit einer verschleißoptimierten Formgebung, aufweisend
einen Grundkörper (10) mit
einem Eingriffsbereich (12), vorzugsweise einer Werkzeugspitze, zum Eingriff in ein Bodenmaterial; und
einem Gleitbereich (14), vorzugsweise einer Gleitfläche, für das Bodenmaterial,
wobei der Gleitbereich (14) zumindest eine Vertiefung (16) aufweist, die sich in den Grundkörper (10) erstreckt.

2. Bodenbearbeitungswerkzeug (100) nach Anspruch 1, wobei die zumindest eine Vertiefung zumindest abschnittsweise angepasst an eine Form (18), vorzugsweise formkorrespondierend zu der Form (18), des Grundkörpers (10) ausgebildet ist.

3. Bodenbearbeitungswerkzeug (100) nach Anspruch 2, wobei die Form (18) des Grundkörpers (10)
eine, vorzugsweise dem Gleitbereich (14) entgegengesetzte, Außenseite (18a) des Grundkörpers (10) ist; und/oder
durch eine Mittellinie (18b) und/oder eine Grundkontur und/oder eine Außenkontur des Grundkörpers (10) definiert ist; und/oder
zumindest eine, vorzugsweise zu dem Gleitbereich (14) quer stehende, Seitenfläche (18c) des Grundkörpers (10) ist.

4. Bodenbearbeitungswerkzeug (100) nach einem der Ansprüche 2 oder 3, wobei die Form (18) des Grundkörpers (10) entlang einer Längsrichtung (L) des Grundkörpers (10) gekrümmt ist.

5. Bodenbearbeitungswerkzeug (100) nach einem der vorhergehenden Ansprüche, wobei die zumindest eine Vertiefung (16) durch eine Grundfläche (20) begrenzt ist, die vorzugsweise an die Form (18) des Grundkörpers (10) angepasst ausgebildet ist.

6. Bodenbearbeitungswerkzeug (100) nach Anspruch 5, wobei die Grundfläche (20), vorzugsweise zur Anpassung an die Form (18) des Grundkörpers (10), eine Krümmung in Längsrichtung (L) des Grundkörpers (10) aufweist.

7. Bodenbearbeitungswerkzeug (100) nach einem der Ansprüche 5 oder 6, wobei die Grundfläche (20) zumindest eine stufenartige Erhebung (22a-c) aufweist, vorzugsweise durch die die Grundfläche (20) an die Form (18) des Grundkörpers (10) angepasst ist.

8. Bodenbearbeitungswerkzeug (100) nach Anspruch 7, wobei die zumindest eine stufenartige Erhebung (22a-c) entgegen einer Bewegungsrichtung (B) des Bodenmaterials geneigt ist.

9. Bodenbearbeitungswerkzeug (100) nach einem der Ansprüche 7 oder 8, wobei die zumindest eine stufenartige Erhebung (22a-c) eine Spitze aufweist, die bündig mit dem Gleitbereich (14) abschließt oder noch innerhalb der zumindest einen Vertiefung (16) endet.

10. Bodenbearbeitungswerkzeug (100) nach einem der Ansprüche 2 bis 9, wobei die zumindest eine Vertiefung (16) durch zumindest eine Innenfläche (24a-b), vorzugsweise zwei gegenüberliegende Innenflächen (24a-b), begrenzt sein, die an die Form (18) des Grundkörpers (10) angepasst ausgebildet ist.

11. Bodenbearbeitungswerkzeug (100) nach einem der vorhergehenden Ansprüche, wobei der Grundkörper (10) zwischen der zumindest einen Vertiefung (16) und einer der zumindest einen Vertiefung (16) entgegengesetzten Außenseite (18a) des Grundkörpers (10), entlang einer Bewegungsrichtung (B) des Bodenmaterials gesehen, eine im Wesentlichen konstante Wandstärke aufweist.

12. Bodenbearbeitungswerkzeug (100) nach einem der vorhergehenden Ansprüche, wobei die zumindest eine Vertiefung (16) einen sich in Bewegungsrichtung (B) des Bodenmaterials, vorzugsweise stetig, vergrößernden Querschnitt und/oder eine sich in Bewegungsrichtung (B) des Bodenmaterials, vorzugsweise stetig, zunehmende Breite (26, 26') aufweist.

13. Bodenbearbeitungswerkzeug (100) nach einem der vorhergehenden Ansprüche, aufweisend zumindest ein, vorzugsweise plattenförmiges, Verschleißminderungselement (28a-k), vorzugsweise Hartmetallelement, das in dem Gleitbereich (14) angeordnet ist.

14. Bodenbearbeitungswerkzeug (100) nach Anspruch 13, wobei das zumindest eine Verschleißminderungselement (28a-k) mehrere Verschleißminderungselemente (28a-k) umfasst, die
reihenartig in einer Längsrichtung (L) des Grundkörpers (10) hintereinander angeordnet; und/oder
quer zu einer Längsrichtung (L) des Grundkörpers (10) nebeneinander; und/oder
beidseitig neben der zumindest eine Vertiefung (16) angeordnet sind.

15. Bodenbearbeitungswerkzeug (100) nach einem der vorhergehenden Ansprüche, aufweisend zumindest ein, vorzugsweise plattenförmiges, Verschleißminderungselement, vorzugsweise Hartmetallelement, das innerhalb der zumindest einen Vertiefung (16), vorzugsweise auf der Grundfläche (20), angeordnet ist.

16. Bodenbearbeitungswerkzeug (100) nach einem der vorhergehenden Ansprüche, aufweisend zumindest ein, vorzugsweise plattenförmiges, Verschleißminderungselement (32a-b), vorzugsweise Hartmetallelement, das in dem Eingriffsbereich (12) angeordnet ist.

17. Bodenbearbeitungswerkzeug (100) nach Anspruch 16, wobei das Verschleißminderungselement (32a-b) mehrere quer zu einer Längsrichtung (L) des Grundkörpers (10) nebeneinander angeordnete und/oder in einer Längsrichtung (L) des Grundkörpers (10) reihenartig hintereinander angeordnete Verschleißminderungselemente (32a-b) umfasst.

18. Bodenbearbeitungswerkzeug (100) nach einem der vorhergehenden Ansprüche, wobei der Grundkörper (10) zumindest einen Soll-Verschleißbereich aufweist, der ausgebildet ist, im Betrieb des Bodenbearbeitungswerkzeugs (100) zu verschleißen und derart zumindest eine weitere Vertiefung auszubilden.

19. Bodenbearbeitungswerkzeug (100) nach einem der vorhergehenden Ansprüche, wobei die zumindest eine Vertiefung (16), vorzugsweise durchgängig, Taschen-artig und/oder Langloch-förmig ausgebildet ist.

20. Bodenbearbeitungswerkzeug (100) nach einem der vorhergehenden Ansprüche, wobei die zumindest eine Vertiefung (16) mittels eines zerspanenden Herstellverfahrens in den Grundkörper (10) eingebracht ist.

21. Bodenbearbeitungswerkzeug (100) nach einem der vorhergehenden Ansprüche, wobei der Grundkörper (10) als Schmiedeteil und/oder als Gussteil ausgeführt ist.

22. Bodenbearbeitungswerkzeug (100) nach einem der vorhergehenden Ansprüche, wobei die zumindest eine Vertiefung (16), in einer Bewegungsrichtung (B) des Bodenmaterials gesehen, vorzugsweise direkt, an den Eingriffsbereich (12) anschließt, um das Bodenmaterial in der zumindest einen Vertiefung (16) aufzunehmen.

23. Bodenbearbeitungswerkzeug (100) nach einem der vorhergehenden Ansprüche, wobei die zumindest eine Vertiefung (16) eingerichtet ist, um während eines Feldbetriebs Bodenmaterial zur Ausbildung einer Bodenmaterial-Gleitfläche anzusammeln, vorzugsweise wodurch im Feldbetrieb, insbesondere zur Verschleißreduzierung, Bodenmaterial auf Bodenmaterial gleitet und/oder Bodenmaterialströmungen entlang der zumindest einen Vertiefung (16), entlang des Gleitbereichs (14) und/oder entlang des Bodenbearbeitungswerkzeugs (100) im Wesentlich gleich sind wie ohne die zumindest eine Vertiefung (16).

24. Landwirtschaftliche Bodenbearbeitungsmaschine, vorzugsweise zur Auflockerung eines Bodens, wobei die landwirtschaftliche Bodenbearbeitungsmaschine zumindest ein Bodenbearbeitungswerkzeug (100) nach einem der vorhergehenden Ansprüche umfasst.
